## Europäisches Patentamt

## European Patent Office

## Office européen des brevets

(19)

(11) Veröffentlichungsnummer: **0 239 906**
**B1**

(12)

# EUROPÄISCHE PATENTSCHRIFT

(45) Veröffentlichungstag der Patentschrift:
27.09.89

(51) Int. Cl.⁴: **C08G 18/14, C08G 18/80**

(21) Anmeldenummer: **87104276.8**

(22) Anmeldetag: **24.03.87**

(54) Thermisch verformbare PUR-Hartschaumstoffe, ein Verfahren zu ihrer Herstellung und ihre Verwendung zur Herstellung von Automobilinnenverkleidungen.

(30) Priorität: **02.04.86 DE 3610961**

(43) Veröffentlichungstag der Anmeldung:
**07.10.87 Patentblatt 87/41**

(45) Bekanntmachung des Hinweises auf die Patenterteilung:
**27.09.89 Patentblatt 89/39**

(84) Benannte Vertragsstaaten:
**BE DE ES FR GB IT NL SE**

(56) Entgegenhaltungen:
**EP-A- 0 118 876**
**DE-A- 2 317 161**

(73) Patentinhaber: **BAYER AG,**
**D-5090 Leverkusen 1 Bayerwerk(DE)**

(72) Erfinder: **König, Eberhard, Dr., Flörsheimer Strasse 4,**
**D-6093 Flörsheim(DE)**
Erfinder: **Gronemeier, Uwe Fritz, Enkeln 17,**
**D-5067 Kürten(DE)**
Erfinder: **Kraft, Karl-Josef, Dr., Heymannstrasse 38,**
**D-5090 Leverkusen 1(DE)**

ACTORUM AG

**Beschreibung**

Die Erfindung betrifft thermisch verformbare, hitzevernetzbare PUR-Hartschaumstoffe und deren Verwendung für Automobilinnenverkleidungen, z.B. als einbaufertige Autohimmel.

PUR-Hartschaumstoffe für den genannten Anwendungszweck sind bereits bekannt geworden. So werden beispielsweise in der DE-OS 2 607 380 warmformbare Polyisocyanurat-Schaumstoffe, die zum überwiegenden Teil aus destilliertem Diphenylmethan-4,4'-diisocyanat aufgebaut sind, beschrieben. Der Nachteil bei diesen Schaumstoffen besteht auch in wirtschaftlichen Gründen, da fast 80 Gew.-% dieser Schaumstoffe aus der relativ teuren Isocyanat-Komponente zusammengesetzt sind.

In der EP 118 876 werden thermoplastische PUR-Schaumstoffe, basierend auf Polyestern, beschrieben. Diese Schaumstoffe besitzen für den hier ins Auge gefaßten Anwendungszweck technische Mängel, da sie zu weich sind.

Um steife, selbsttragende Formteile herstellen zu können, müssen derartige Schaumstoffe mit reaktiven UP-Harzmatten verstärkt werden. Erst mit dieser zusätzlichen Maßnahme erhalten diese Schaumstoffe die geforderte Wärmeformbeständigkeit.

Aufgabe der Erfindung war es, einen PUR-Schaumstoff
– auf der Grundlage wirtschaftlicher Komponenten,
– mit guten Verformungseigenschaften im Bereich von 150 bis 190°C
– mit einer Wärmeformbeständigkeit nach Warmverformung von mindestens 95°C
– einer für Selbsttrageeigenschaften benötigten Steifigkeit
zur Verfügung zu stellen.

Diese Aufgabe konnte mit den nachstehend näher beschriebenen PUR-Hartschaumstoffen gelöst werden.

Gegenstand der Erfindung sind thermisch sowohl verformbare als auch vernetzbare PUR-Hartschaumstoffe, erhältlich durch Umsetzung
   a) eines organischen Polyisocyanats mit
   b) einer Polyolkomponente, enthaltend
   b1) mindestens eine organische Polyhydroxylverbindung mit einer Hydroxylzahl von 28 bis 1200 und
   b2) übliche, aus der PUR-Schaumstoffchemie bekannte Zusatzmittel,
dadurch gekennzeichnet, daß als Polyisocyanat a) ein Polyisocyanat der Diphenylmethanreihe mit einer Viskosität von zirka 20–700 mPa.s/25°C eingesetzt wird und daß die Komponente b2) ε-Caprolactam und/oder Nonylphenol als NCO Gruppen blockierende Verbindungen b3) in einer Menge von 1–25 Gew.-%, bezogen auf das Gesamtgewicht der Komponente b), enthält.

Gegenstand der Erfindung ist ferner ein Verfahren zur Herstellung von bei 150°–190°C thermisch verformbaren PUR-Hartschaumstoffen durch Umsetzung
   a) eines organischen Polyisocyanats mit
   b) einer Polyolkomponente, enthaltend
   b1) mindestens eine organische Polyhydroxylverbindung mit einer Hydroxylzahl von 28–1200 und
   b2) übliche, aus der PUR-Schaumstoffchemie bekannte Zusatzmittel,
dadurch gekennzeichnet, daß als Polyisocyanat a) ein Polyisocyanat der Diphenylmethanreihe mit einer Viskosität von zirka 20–700 mPa.s/25°C eingesetzt wird und daß die Komponente b2) ε-Caprolactam und/oder Nonylphenol als NCO-Gruppen blockierende Verbindungen b3) in einer Menge von 1–25 Gew.-%, bezogen auf das Gesamtgewicht der Komponente b), enthält.

Die Erfindung betrifft schließlich die Verwendung der PUR-Hartschaumstoffe zur Herstellung von Automobilinnenverkleidungen durch thermische Verformung bei 150 bis 190°C, vorzugsweise zur Herstellung von Automobilhimmeln.

Die Herstellung der erfindungsgemäßen, warmverformbaren, hitzevernetzbaren PUR-Hartschaumstoffe erfolgt vorzugsweise als (relativ dünne, anwendungsfertige) Schaumstoffplatte durch Umsetzung der Polyisocyanatkomponente a) mit der Polyolkomponente b) auf einer sogenannten Doppeltransportbandanlage.

Bei der Dosierung dieser Komponenten wird in der Regel ein Äquivalentverhältnis der Isocyanatgruppen der Komponente a) zu allen in der Komponente b) vorliegenden, gegenüber Isocyanatgruppen reaktionsfähigen Gruppen von 1:1 bis 2,0:1 eingehalten.

Als Polyisocyanatkomponente a) werden Polyisocyanate der Diphenylmethanreihe mit einer Viskosität bei 25°C von zirka 20 bis 700, insbesondere von zirka 200 bis 500 mPa.s, verwendet.

Bei der Komponente b) handelt es sich um ein Gemisch aus b1) organischen Polyhydroxylverbindungen, b2) für die Schaumstoffbildung notwendigen an sich bekannten Zusatzstoffen und b3) den erfindungswesentlichen Isocyanat-Blockierungsmitteln.

Als Komponente b1) werden die aus der Polyurethanchemie bekannten Polyester- oder Polyetherpolyole bzw. deren Gemische sowie sogenannte Kettenverlängerungsmittel in einem OH-Zahlbereich von 28 bis 1200 eingesetzt.

Bevorzugt sind difunktionelle Polyester im OH-Zahlbereich 112 bis 400 sowie Propylenoxid/Ethylenoxid-Polyetherpolyole mit einer Funktionalität von 2 bis 4 und einem OH-Zahlbereich von 28 bis 900.

2

Für die Verschäumung notwendige Zusatzmittel b2) sind die an sich bekannten Treibmittel, Schaumstabilisatoren und Katalysatoren.

Überwiegend eingesetztes Treibmittel ist das aus der Umsetzung der NCO-Gruppen mit Wasser herrührende Kohlendioxid. In untergeordnetem Maße können daneben auch physikalische Treibmittel, z.B. Trichlorfluormethan, zwecks Erzielung bestimmter Zellstrukturen mitverwendet werden. An Schaumstabilisatoren können die bekannten, über Polydimethylsiloxan-Endgruppen verfügenden Polyether eingesetzt werden.

Als Katalysatoren kommen z.B. einbaufähige geruchsarme Katalysatoren in Frage wie N,N-Dimethylethanolamin oder N-Methyl-diethanolamin, oder schwer flüchtige Katalysatoren, z.B. Kaliumacetat oder Zinn(II)-octoat.

Bei der Komponente b3) handelt es sich um die aus der Polyurethanchemie bekannten Verbindungen für die Maskierung von NCO-Gruppen ε-Caprolactam und Nonylphenol bzw. deren Gemische.

Diese Verbindungen b3) werden in Mengen von 1 bis 25 Gew.-%, vorzugsweise 5 bis 15 Gew.-%, bezogen auf die Gesamtkomponente b), eingesetzt.

Bevorzugt werden ε-Caprolactam und Nonylphenol bzw. deren Gemische.

In einer besonderen Ausführungsform der Erfindung kann die Komponente b3) auch ganz oder teilweise mit der Polyisocyanatkomponente a) umgesetzt worden sein, bevor a) mit der Komponente b) reagiert.

Eine bevorzugte Umsetzung der oben erläuterten Komponenten a) und b) zu PUR-Hartschaumstoffplatten erfolgt auf einer sogenannten Doppeltransportbandanlage, wobei die Komponenten a) und b) vorzugsweise in den Äquivalentverhältnissen 1:1 bis 2:1, noch mehr bevorzugt 1,1:1 bis 1,5:1, dosiert werden.

Die Dosierung und Vermischung der beiden Komponenten übernimmt hierbei eine an sich bekannte 2-Komponenten-Verschäumungsmaschine, die mittels einer oszillierenden Auftragsvorrichtung das Reaktivgemisch gleichmäßig über die gesamte Breite des künftigen Trägermaterials, z.B. ein Glasvlies, verteilt. Das zu einem Film verlaufende Reaktivgemisch wird von einem weiteren Trägermaterial, z.B. ebenfalls ein Glasvlies oder eine Dekorfolie, abgedeckt, bevor es in die ca. 90°C warme Reaktivzone des Doppeltransportbandes einläuft. Die Bandgeschwindigkeit beträgt etwa 12 m/min. Innerhalb der ca. 10 m langen Reaktivzone erfolgt der Schäum- und Aushärtprozeß. Die am Bandende anfallende Endlosschaumstoffplatte wird besäumt und auf Maß geschnitten. Man erhält eine lagerfähige, thermisch verformbare PUR-Hartschaumstoffplatte mit Sandwichaufbau, ein sogenanntes Halbzeugmaterial.

Bei der thermischen Verformung, z.B. vorzugsweise zu Autohimmeln, werden die Schaumstoffplatten in der Regel auf 150 bis 190°C, vorzugsweise 180 bis 190°C erwärmt, z.B. mittels eines Halterahmens in einer entsprechend großen Heizanlage 2-4 min auf 180 bis 190°C bis zur Erweichung des Schaumstoffes. Anschließend gelangen die heißen, in dem Rahmen durchhängenden Schaumplatten in die kalte, aufgeklappte Form, wo die Schaumplatten während z.B. 1 min zu den entsprechenden Formteilen verpreßt werden.

Der Vorteil der erfindungsgemäßen PUR-Hartschaumstoffe liegt darin, daß diese beim Heißverformen einer Nachreaktion unterliegen. Infolge dieser Nachreaktion wandelt sich der Schaumstoff von einem eher thermoplastischen in ein duroplastisches Material um. Augenscheinlich wird diese Veränderung beim Vergleich der Glasumwandlungstemperaturen für die lagerbeständige Schaumstoffplatte und dem aus dieser hergestellten Formteil. Die Glasumwandlungstemperatur, ermittelbar z.B. mit dem Torsionsschwingversuch nach DIN 53445, für die heißverpreßte Platte liegt um 30 bis 50°C höher und grenzt an den Bereich der Zersetzungstemperatur des PUR-Materials von ca. 200°C.

Mit den erfindungsgemäßen Schaumstoffen können zum einen wegen ihrer relativ niedrigen Erweichungstemperatur sehr abbildegenaue und schwierig strukturierte Formteile hergestellt werden. Zum anderen verfügen diese Formteile wegen der Veränderung im Zusammenhang mit der Nachreaktion über eine verbesserte Wärmebeständigkeit bei Prüftemperaturen von 95°C und höher.

Daneben sind die erfindungsgemäßen Schaumstoffe bevorzugt aus technisch gut zugänglichem, wirtschaftlich günstigem Roh-MDI aufgebaut.

## Beispiel 1

### A) Rezeptur:

| | | |
|---|---|---|
| 41,5 | Gew.-Teile | eines auf Propylenglykol gestarteten Propylenoxidpolyethers, OH-Zahl 500 |
| 22,0 | Gew.-Teile | eines auf Trimethylolpropan gestarteten Propylenoxidpolyethers, OH-Zahl 875 |
| 20,0 | Gew.-Teile | eines auf Propylenglykol gestarteten Propylenoxid/Ethylenoxid-Polyethers, OH-Zahl 28 |
| 5,5 | Gew.-Teile | $\varepsilon$-Caprolactam; entsprechend einer OH-Zahl 500 |
| 5,5 | Gew.-Teile | Nonylphenol; OH-Zahl 250 |
| 1,5 | Gew.-Teile | Dimethylethanolamin; OH-Zahl 620 |
| 4,0 | Gew.-Teile | Wasser; rechnerische OH-Zahl 6230 |
| 100,0 | Gew.-Teile | obige Polykomponente, Misch-OH-Zahl 700 (einschließlich Wasser) |
| 187,0 | Gew.-Teile | eines Polyphenyl-polymethylen-polyisocyanates (Roh-MDI), «Zweikerngehalt» ca. 45 Gew.-%, NCO-Gehalt 31 Gew.-%, Viskosität bei 25°C ca. 400 mPas |

Die Polyolkomponente enthält 11,0 Gew.-% an Isocyanat-Blockierungsmitteln, $\varepsilon$-Caprolactam und Nonylphenol.

### B) Herstellung und Eigenschaften der warmverformbaren PUR-Hartschaumstoffplatte

100 Gew.-Teile der unter 1 A) beschriebenen Polyolkomponente und 187 Gew.-Teile des unter 1 A) beschriebenen Polyisocyanates werden mittels einer 2-Komponenten-Verschäumungsanlage gemischt und quer zur Bewegungsrichtung des Transportbandes auf die mittransportierte untere Deckschicht, ein Glasvlies, gleichmäßig aufgetragen. Die Dosierung der Komponenten entspricht einem NCO/OH-Verhältnis von 1,1. Die Austragsleistung der Verschäumungsmaschine wird auf 8400 g/min (5470 g/min Polyisocyanat und 2930 g/min Polyol) eingestellt, da die Bandbreite 1,40 m, die vorgesehene Schaumhöhe 1 cm, die Schaumrohdichte 50 kg/m³ und die Bandgeschwindigkeit 12 m/min beträgt. Das ausgetragene Reaktivgemisch verläuft zu einem gleichmäßigen Film und wird mit einer zweiten, von oben in das Doppeltransportband einlaufenden Deckschicht, z.B. eine textile Dekorbahn, abgesperrt. In der sich anschließenden etwa 10 m langen, auf 90°C beheizten Reaktionszone kommt es zur Schaumbildung. Am Bandende erhält man eine zäh-hart ausreagierte, ca. 1 cm starke Endlosschaumplatte, die besäumt und auf die Länge des vorgesehenen Formteils zurechtgeschnitten wird.

Diese Schaumstoffplatte mit Sandwichaufbau ist ein festes, selbsttragendes und lagerfähiges Halbzeugmaterial mit einem Schaumstoffkern der Rohdichte von 50 kg/m³ und einer Druckfestigkeit von 0,47 MPa (ermittelt im Druckversuch nach DIN 53421).

Im Torsionsschwingversuch nach DIN 53445 wird an obigen Schaumstoffproben der Schubmodul sowie dessen Dämpfung (1. Ableitung) im Temperaturintervall 20 bis 220°C bestimmt. Entsprechend dem Dämpfungsmaximum hat dieser Schaumstoff eine Glasübergangstemperatur bei 150°C. Oberhalb dieser Temperatur erweicht er und verliert seine mechanische Festigkeit.

### C) Herstellung und Eigenschaften des Formteils

Die oben beschriebene Sandwichplatte (Maße in mm: 170 × 135 × 10) wird in einer entsprechend großen Kontaktplattenheizung 4 min. bei 185°C erwärmt. Anschließend wird die erweichte Platte mittels eines Halterahmens in die kalte Form für einen Autohimmel gelegt. Die Form wird zugefahren und nach ca. 1 min wieder geöffnet. Der entformte Autohimmel ist nach einem weiteren Bearbeitungsschritt an der Stanze einbaufähig.

Die Glasübergangstemperatur (gemessen nach DIN 53445) bei dem Schaumstoff des Autohimmels wird bei 220°C ermittelt, sie liegt damit um 70°C höher als diejenige der Halbzeugplatte. Dem auf diese Weise irreversibel veränderten Schaumstoff entspricht eine verbesserte Wärmeformbeständigkeit.

Die Wärmeformbeständigkeit wird am eingebauten Autohimmel gestestet, indem die Dachkonstruktion zusammen mit dem montierten Autohimmel in einer Klimakammer bei 110°C für 16 Stdn. gealtert wird. Nach dieser Prüfung darf sich der Autohimmel an keiner der 9 Meßstellen um mehr als 5 mm nach oben oder unten aus der Ausganglage bewegt haben.

Dieser Test wird mit dem beschriebenen Autohimmel bestanden.

### Vergleichsbeispiel

Dieses Beispiel beschreibt die Schaumstoffeigenschaften der in Beispiel 1A) angegebenen Rezeptur aber ohne den Gehalt an Isocyanat-Blockierungsmitteln. Die Mengen der in 1A) verwendeten Blockierungsmittel wurden hierbei gleichmäßig auf die einzelnen Polyetherpolyole wie folgt verteilt:

| | | |
|---|---|---|
| 45,0 | Gew.-Teile | eines auf Propylenglykol gestarteten Propylenoxidpolyethers, OH-Zahl 500 |
| 25,0 | Gew.-Teile | eines auf Trimethylolpropan gestarteten Propylenoxidpolyethers, OH-Zahl 875 |
| 23,5 | Gew.-Teile | eines auf Propylenglykol gestarteten Propylenoxid/Ethylenoxid-Polyethers, OH-Zahl 28 |
| .1,0 | Gew.-Teile | Stabilisator OS 50 (Bayer AG) |
| 1,5 | Gew.-Teile | Dimethylethanolamin; OH-Zahl 620 |
| 4,0 | Gew.-Teile | Wasser; rechnerische OH-Zahl 620 |
| 100,0 | Gew.-Teile | obige Polykomponente, Misch-OH-Zahl 700 (einschließlich Wasser) |
| 187,0 | Gew.-Teile | des Polyisocyanates gemäß Beispiel 1A) |

Die Dosierung der Komponenten entspricht einem NCO/OH-Verhältnis von 1,1.

Gemäß obiger Rezeptur wird ein Schaum-Testpäckchen hergestellt und in 12 mm starke Scheiben aufgeschnitten. Der Schaumstoff hat eine Rohdichte von ca. 40 kg/m³. Von diesem Schaumstoff wird im Torsionsschwingversuch nach DIN 53445 die Glasübergangstemperatur bestimmt: Diese beträgt 190°C.

Eine 12 mm Platte wird in einer Kontaktplattenheizung 4 min auf 190°C erwärmt und anschließend kalt verformt. Die Glasübergangstemperatur dieses Formteils wird mit 200°C ermittelt. Außerdem weist dieses Formteil Risse auf.

Im Vergleich zu dem in Beispiel 1) beschrieben Schaumstoff zeigt der obige zwei charakteristische Unterschiede:

- die nahezu identischen Glasübergangstemperaturen von 190°C bzw. 200°C für den frisch hergestellten und den heißverpreßten Schaumstoff und

- die sehr hochliegende Glasübergangstemperatur von 190°C für den frisch hergestellten Schaumstoff. Letztere erlaubt keine ausreichende Erweichung mehr, so daß der Schaumstoff beim Verformen reißt.

Beispiel 2

A) Rezeptur:

| | | |
|---|---|---|
| 44,0 | Gew.-Teile | eines auf Propylenglykol gestarteten Propylenoxidpolyethers, OH-Zahl 500 |
| 40,6 | Gew.-Teile | eines auf Trimethylolpropan gestarteten Propylenoxid/Ethylenoxid-Polyethers, OH-Zahl 35 |
| 0,5 | Gew.-Teile | Stabilisator OS 50 (Polydimethylsiloxan der Bayer AG) |
| 11,0 | Gew.-Teile | ε-Caprolactam; entsprechend einer OH-Zahl 500 |
| 3,9 | Gew.-Teile | Wasser; rechnerische OH-Zahl 6230 |
| 100,0 | Gew.-Teile | obige Polykomponente, Misch-OH-Zahl 530 |
| 170,0 | Gew.-Teile | eines Polyphenyl-polymethylen-polyisocyanates (Roh-MDI), NCO-Gehalt 31 Gew.-%, Viskosität bei 25°C ca. 400 mPas (vgl. Beispiel 1A) |

Die Polyolkomponente enthält 11,0 Gew.-% des Isocyanat-Blockierungsmittels ε-Caprolactam.

B) Herstellung und Eigenschaften der warmverformbaren PUR-Hartschaumstoff-Platte

100 Gew.-Teile der unter 2A) beschriebenen Polyolkomponente und 170 Gew.-Teile des unter 2A) beschriebenen Polyisocyanates werden mit einer 2 Komponenten-Verschäumungsmaschine auf einer Doppeltransportbandanlage, wie in Beispiel 1B) erläutert, zu PUR-Hartschaumstoffplatten mit Sandwichaufbau verarbeitet. Die Dosierung der Komponenten entspricht einem NCO/OH-Verhältnis von 1,3.

Die entstandene, selbsttragende Halbzeugplatte besitzt einen Schaumstoffkern mit der Rohdichte 50 kg/m³ und einer Druckfestigkeit von 0,39 mPa (ermittelt im Druckversuch nach DIN 53421).

Die Glasumwandlungstemperatur dieses Schaumstoffes liegt bei 130°C (ermittelt im Torsionsschwingversuch nach DIN 53445).

C) Herstellung und Eigenschaften des Formteils

Die oben beschriebene Halbzeugplatte mit Sandwichaufbau wird analog der im Beispiel 1C) beschriebenen Weise 4 min bei 180°C erwärmt und danach 1 min kalt verpreßt.

Die Glasumwandlungstemperatur dieses heißverpreßten Schaumstoffes ist auf 170°C (ermittelt nach DIN 53445) angestiegen.

Die Wärmeformbeständigkeit, geprüft am eingebauten Automhimmel (vgl. Beispiel 1C), wird bei 95°C erfüllt.

### Beispiel 3

**A) Rezeptur:**

| | | |
|---|---|---|
| 40,0 | Gew.-Teile | eines auf Propylenglykol gestarteten Propylenoxidpolyethers, OH-Zahl 500 |
| 40,0 | Gew.-Teile | eines auf Trimethylolpropan gestarteten Propylenoxid/Ethylenoxid-Polyethers, OH-Zahl 35 |
| 0,7 | Gew.-Teile | Stabilisator OS 50 (Polydimethylsiloxan der Bayer AG) |
| 16,0 | Gew.-Teile | Nonylphenol, OH-Zahl 250 |
| 3,3 | Gew.-Teile | Wasser |
| 100,0 | Gew.-Teile | obige Polykomponente, Misch-OH-Zahl 450 |
| 170,0 | Gew.-Teile | eines Polyphenyl-polymethylen-polyisocyanates (Roh-MDI), NCO-Gehalt 31 Gew.-%, Viskosität bei 25°C ca. 400 mPas (vgl. Beispiel 1A) |

Die Polyolkomponente enthält 16,0 Gew.-% des Isocyanat-Blockierungsmittels Nonylphenol.

**B)** Herstellung und Eigenschaften der warmverformbaren PUR-Hartschaumstoff-Platte

100 Gew.-Teile der unter 3A) beschriebenen Polyolkomponente und 170 Gew.-Teile des unter 3A) beschriebenen Polyisocyanates werden mit einer 2 Komponenten-Verschäumungsmaschine auf einer Doppeltransportbandanlage, wie in Beispiel 1B) erläutert, zu PUR-Hartschaumstoffplatten mit Sandwichaufbau verarbeitet. Die Dosierung der Komponenten entspricht hierbei einem NCO/OH-Verhältnis von 1,5.

Die entstandene, selbsttragende, lagerbeständige Halbzeugplatte besitzt einen Schaumstoffkern mit der Rohdichte 55 kg/m³ und einer Druckfestigkeit von 0,40 MPa (ermittelt im Druckversuch nach DIN 53421).

Die Glasumwandlungstemperatur dieses Schaumstoffes liegt bei 140°C (ermittelt im Torsionsschwingversuch nach DIN 53445).

**C)** Herstellung und Eigenschaften des Formteils

Die oben beschriebene Halbzeugplatte wird analog der in Beispiel 1C) beschriebenen Weise 4 min bei 180°C erwärmt und danach 1 min kalt verpreßt.

Die Glasumwandlungstemperatur dieses heißverpreßten Schaumstoffes ist auf 170°C, also um 30°C angestiegen. Wie erwähnt, wird die Glasumwandlungstemperatur als Maximum der Dämpfung der Schubmodulkurve im Temperaturbereich von 20 bis 220°C beim Torsionsschwingversuch (DIN 53445) bestimmt.

Die Wärmeformbeständigkeit, geprüft am eingebauten Autohimmel (vgl. Beispiel 1C), wird bei 95°C erfüllt.

**Patentansprüche**

1. Bei 150°–190° thermisch verformbare und vernetzbare PUR-Hartschaumstoffe, erhältlich durch Umsetzung
   a) eines organischen Polyisocyanats mit
   b) einer Polyolkomponente, enthaltend
   b1) mindestens eine organische Polyhydroxylverbindung mit einer Hydroxylzahl von 28–1200 und
   b2) übliche, aus der PUR-Schaumstoffchemie bekannte Zusatzmittel,
   dadurch gekennzeichnet, daß als Polyisocyanat a) ein Polyisocyanat der Diphenylmethanreihe mit einer Viskosität von zirka 20–700 mPa.s/25°C eingesetzt wird und daß die Komponente b2) ε-Caprolactam und/oder Nonylphenol als NCO-Gruppen blockierende Verbindungen b3) in einer Menge von 1–25 Gew.-%, bezogen auf das Gesamtgewicht der Komponente b), enthält.

2. PUR-Hartschaumstoffe gemäß Anspruch 1, dadurch gekennzeichnet, daß die Komponente b3) ganz oder teilweise mit der Polyisocyanatkomponente a) umgesetzt worden ist, bevor a) mit der Komponente b) reagiert.

3. PUR-Hartschaumstoffe gemäß Anspruch 1 und 2, dadurch gekennzeichnet, daß die Komponente b1) aus difunktionellen Polyestern vom OH-Zahlbereich 112–400 besteht.

4. PUR-Hartschaumstoffe gemäß Anspruch 1 und 2, dadurch gekennzeichnet, daß die Komponente b1) aus Propylenoxid/Ethylenoxid-Polyetherpolyolen mit einer Funktionalität von 2–4 und einem OH-Zahlbereich von 28–900 besteht.

5. PUR-Hartschaumstoffe gemäß Anspruch 1–4, erhältlich durch Umsetzung der Komponenten a) und b) auf einer Doppeltransportbandanlage zu PUR-Hartschaumstoffplatten.

6. Verfahren zur Herstellung von bei 150°–190°C thermisch verformbaren PUR-Hartschaumstoffen durch Umsetzung

a) eines organischen Polyisocyanats mit

b) einer Polyolkomponente, enthaltend

b1) mindestens eine organische Polyhydroxylverbindung mit einer Hydroxylzahl von 28–1200 und

b2) übliche, aus der PUR-Schaumstoffchemie bekannte Zusatzmittel,

dadurch gekennzeichnet, daß als Polyisocyanat a) ein Polyisocyanat der Diphenylmethanreihe mit einer Viskosität von zirka 20–700 mPa.s/25°C eingesetzt wird und daß die Komponente b2) ε-Caprolactam und/oder Nonylphenol als NCO-Gruppen blockierende Verbindungen b3) in einer Menge von 1–25 Gew.-%, bezogen auf das Gesamtgewicht der Komponente b), enthält.

7. Verfahren zur Herstellung von PUR-Hartschaumstoffen gemäß Anspruch 6, dadurch gekennzeichnet, daß die Komponente b3) ganz oder teilweise mit der Polyisocyanatkomponente a) umgesetzt worden ist, bevor a) mit der Komponente b) reagiert.

8. Verwendung der PUR-Hartschaumstoffe gemäß Anspruch 1–5 zur Herstellung von Automobilinnenverkleidung durch Warmverformung bei 150°–190°C.

9. Verwendung der PUR-Hartschaumstoffe gemäß Anspruch 8 zur Herstellung von Automobilhimmeln.

**Claims**

1. Rigid PUR foams thermoformable and crosslinkable at 150 to 190°C and obtainable by reaction of

a) an organic polyisocyanate with

b) a polyol component containing

b1) at least one organic polyhydroxyl compound having a hydroxyl value of 28 to 1200 and

b2) typical additives known from PUR foam chemistry,

characterized in that a polyisocyanate of the diphenyl methane series having a viscosity of from about 20 to 700 mPa.s/25°C is used as the polyisocyanate a) and in that component b2) contains ε-caprolactam and/or nonylphenol as NCO-blocking compounds b3) in a quantity of from 1 to 25% by weight, based on the total weight of component b).

2. Rigid PUR foams as claimed in claim 1, characterized in that component b3) has been completely or partly reacted with polyisocyanate component a) before the reaction of a) with component b).

3. Rigid polyurethane foams as claimed in claims 1 and 2, characterized in that component b1) consists of difunctional polyesters having an OH value in the range from 112 to 400.

4. Rigid PUR foams as claimed in claims 1 and 2, characterized in that component b1) consists of propylene oxide/ethylene oxide polyether polyols having a functionality of 2 to 4 and an OH value in the range from 28 to 900.

5. Rigid PUR foams as claimed in claims 1 to 4 obtainable by reaction of components a) and b) in a laminator to form rigid PUR foam sheets.

6. A process for the production of rigid PUR foams thermoformable at 150 to 190°C by reaction of

a) an organic polyisocyanate with

b) a polyol component containing

b1) at least one organic polyhydroxyl compound having a hydroxyl value of 28 to 1200 and

b2) typical additives known from PUR foam chemistry,

characterized in that a polyisocyanate of the diphenyl methane series having a viscosity of approximately 20 to 700 mPa.s/25°C is used as the polyisocyanate a) and in that component b2) contains ε-caprolactam and/or nonylphenol as NCO-blocking compounds b3) in a quantity of 1 to 25% by weight, based on the total weight of component b).

7. A process for the production of rigid PUR foams as claimed in claim 6, characterized in that component b3) has been completely or partly reacted with the polyisocyanate component a) before the reaction of a) with component b).

8. The use of the rigid PUR foams claimed in claims 1 to 5 for the production of interior trim for automobiles by thermoforming at 150 to 190°C.

9. The use of the rigid PUR foams claimed in claim 8 for the production of automobile roofs.

**Revendications**

1. Mousses dures de polyuréthanes réticulables et façonnables thermiquement à 150–190°, obtenues en faisant réagir:

a) un polyisocyanate organique avec

b) un composant polyol contenant

b1) au moins un composé polyhydroxyle organique ayant un indice hydroxyle de 28–1200, et

b2) des additifs habituels connus d'après la chimie des mousses de polyuréthanes,

caractérisées en ce que, comme polyisocyanate a), on utilise un polyisocyanate de la série du diphénylméthane, ayant une viscosité d'environ 20–700 mPa.s/25°C, et en ce que le composant b2) contient de l'ε-caprolactame et/ou du nonylphénol comme composés b3) bloquant les groupes NCO, en une quantité de 1–25% en poids, calculé sur le poids total du composant b).

2. Mousses dures de polyuréthanes selon la revendication 1, caractérisées en ce que le composant b3) est mis à réagir entièrement ou partiellement avec le composant polyisocyanate a) avant que le composant a) ne réagisse avec le composant b).

3. Mousses dures de polyuréthanes selon les revendications 1 et 2, caractérisées en ce que le composant b1) est constitué de polyesters difonctionnels d'un indice OH se situant dans l'intervalle allant de 112 à 400.

4. Mousses dures de polyuréthanes selon les revendications 1 et 2, caractérisées en ce que le composant b1) est constitué de polyéther-polyols d'oxyde de propylène/oxyde d'éthylène d'une fonctionnalité de 2–4 et d'un indice OH se situant dans l'intervalle allant de 28 à 900.

5. Mousses dures de polyuréthanes selon les revendications 1 à 4, obtenues en faisant réagir les composants a) et b) dans une installation à double bande transporteuse, pour obtenir des plaques de mousse dure de polyuréthane.

6. Procédé de fabrication de mousses dures de polyuréthanes façonnables thermiquement à 150–190°C, en faisant réagir

a) un polyisocyanate organique avec

b) un composant polyol, contenant

b1) au moins un composé polyhydroxyle organique d'un indice hydroxyle de 28–1200, et

b2) des additifs habituels connus d'après la chimie des mousses de polyuréthanes,

caractérisé en ce que, comme polyisocyanate a), on utilise un polyisocyanate de la série du diphénylméthane, ayant une viscosité d'environ 20–700 mPa.s/25°C et en ce que le composant b2) contient de l'ε-caprolactame et/ou du nonylphénol comme composés b3) bloquant les groupes NCO, en une quantité de 1–25% en poids, calculé sur le poids total du composant b).

7. Procédé de fabrication de mousses dures de polyuréthanes selon la revendication 6, caractérisé en ce qu'on fait réagir le composant b3) entièrement ou partiellement avec le composant polyisocyanate a) avant que le composant a) ne réagisse avec le composant b).

8. Utilisation des mousses dures de polyuréthanes selon les revendications 1 à 5, pour la fabrication de revêtements intérieurs de véhicules automobiles, moyennant un façonnage à chaud à 150–190°C.

9. Utilisation des mousses dures de polyuréthanes selon la revendication 8, pour la fabrication d'habillages de plafonds de véhicules automobiles.